(19) Europäisches Patentamt
European Patent Office
Office européen des brevets

(11) **EP 1 915 650 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(21) Anmeldenummer: **06777510.6**

(22) Anmeldetag: **29.06.2006**

(51) Int Cl.:
**G05B 13/04** *(2006.01)*   **F15B 9/09** *(2006.01)*

(86) Internationale Anmeldenummer:
**PCT/EP2006/063684**

(87) Internationale Veröffentlichungsnummer:
**WO 2007/020126 (22.02.2007 Gazette 2007/08)**

(54) **REGELUNGSVERFAHREN UND REGLER FÜR EIN MECHANISCH-HYDRAULISCHES SYSTEM**

CONTROL METHOD AND CONTROL ELEMENT FOR A MECHANICAL-HYDRAULIC SYSTEM

PROCEDE DE REGULATION ET REGULATEUR DESTINES A UN SYSTEME MECANIQUE/HYDRAULIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.08.2005 AT 13782005**

(43) Veröffentlichungstag der Anmeldung:
**30.04.2008 Patentblatt 2008/18**

(73) Patentinhaber: **Voest-Alpine Industrieanlagenbau GmbH & Co**
**4031 Linz (AT)**

(72) Erfinder:
• **KEINTZEL, Georg**
**A-4221 Steyregg (AT)**

• **GRABMAIR, Gernot**
**A-4701 Bad Schallerbach (AT)**
• **SCHLACHER, Kurt**
**A-8045 Graz (AT)**

(74) Vertreter: **Maier, Daniel Oliver**
**Siemens AG**
**Postfach 22 16 34**
**80506 München (DE)**

(56) Entgegenhaltungen:
**EP-A- 0 992 295    EP-A- 1 152 155**
**US-A- 4 502 109**

EP 1 915 650 B1

**Beschreibung**

Die gegenständliche Erfindung betrifft ein Regelungsverfahren für ein mechanisch-hydraulisches System mit einem Freiheitsgrad pro hydraulischem Aktuator als Regelstrecke und einer Vorrichtung zur Implementierung des Verfahrens.

Mechanisch-hydraulische Systeme mit einem (mechanischen) Freiheitsgrad, also Systeme bei denen z.B. ein mechanischer Teil mit einem Freiheitsgrad (Lastsystem) über einen Hydraulikzylinder (Aktuator) betätigt wird, kommen in der Praxis in vielfältigsten Ausgestaltungen vor, wie z.B. als Korbrolle eines Haspels, als Schlingenheber zwischen zwei Gerüsten einer Walzstraße oder als hydraulische Anstellung eines Gerüstes einer Walzstraße, aber auch in allgemeinen Anwendungen wie Positioniertischen, Rütteltischen etc. Diesen Systemen ist gemein, dass sie aufgrund der hydraulischen Ölsäule im Hydraulikzylinder bzw. anderer federnder Elemente im Lastsystem grundsätzlich schwingfähig sind. Als stellvertretende die Allgemeingültigkeit keineswegs einschränkende Beispiele seien hier Anwendungen, bei denen z.B. ein hydraulischer Linearzylinder eine drehbar gelagerte Masse bewegt, z.B. eine Korbrolle, Schlingenheber, etc. genannt. Bei derartigen Systemen zeigt sich ein ausgeprägtes Schwingungsverhalten durch die wie eine Feder wirkende hydraulische Ölsäule. Dies äußert sich in einer unerwünschten Schwingungsneigung des Gesamtsystems an bestimmten Stellen im Frequenzgang: Die dabei auftretenden Resonanzfrequenzen sind im Wesentlichen von der Ersatzmasse des mechanischen Systems, den geometrischen Verhältnissen, sowie der Ersatzfedersteifigkeit der auftretenden Elastizitäten, wie z.B. der Kompressibilität der Ölsäule, und/oder der Elastizität eines Walzgerüsts, etc., bestimmt. Für solche Systeme mit ausgeprägten Resonanzfrequenzen ist nun typisch, dass sie bei Stelleingriffen von außen zu (gedämpften) Schwingungen neigen. Bei Regelvorgängen, die z.B. das Anfahren eines neuen Arbeitspunktes zum Ziel haben, oder das Ausregeln einer von außen eingebrachten Störung, bewirken diese Schwingungen in den Regelvorgängen äußerst unerwünschte transiente Variationen physikalischer Größen. Bei dem oben genannten Beispiel Schlingenheber wirkt sich dies in Bandzugschwankungen aus, die wiederum zu unerwünschten Einschnürungen des Bandes führen. Bei Korbrollen können diese Schwankungen des Druckes der Korbrolle auf das Band zu Oberflächenbeschädigungen durch Eindrücke führen.

In der aktuellen Praxis werden Regler daher oftmals nur sehr langsam eingestellt, um die Anregungen dieser unerwünschten Schwingungen möglichst gering zu halten. Eine aus der Standardliteratur bekannte Möglichkeit ist der Einsatz von so genannten "Notch-Fittern", schmalbandige Bandsperren, die darauf abzielen, die Anregung der Schwingungen durch den Regler durch gezieltes "Ausblenden" des Frequenzbereiches um die Resonanzfrequenz des zu regelnden Systems in der Regelgröße zu vermeiden. Gravierender Nachteil dieser Methode, speziell bei den erwähnten Anwendungen, ist die Tatsache, dass die Charakteristik des mechanischen Systems unverändert bleibt und, wenngleich der Regler selbst eine Anregung der Schwingung vermeidet, von außen angreifende, nicht erfassbare Störungen nach wie vor Schwingungen des Systems verursachen. Auch sind die Resonanzfrequenzen vom gewählten Arbeitspunkt abhängig.

Gravierender zum Tragen kommt bei solchen Systemen aber, dass diese wie erwähnt i.A. ein nichtlineares Verhalten aufweisen. Die bekannten Methoden wie der Einsatz von Notch-Filtern sind Methoden der linearen Regelungstechnik und haben bei nichtlinearen Systemen nur in der Nähe des Arbeitspunktes, für den die nichtlineare Strecke durch ein lineares System approximiert wurde, Gültigkeit. Unmittelbar einsichtig ist aber, z.B. bei hydraulischen Linearantrieben, dass sich mit Variation der Position des Kolbens des hydraulischen Antriebes, und damit der Ölsäule, auch die Resonanzfrequenz ändert. Bei der oben beschriebenen Methode besteht die Möglichkeit ein sehr breites Notch-Filter zu wählen, was wiederum die Dynamik des Gesamtsystems erheblich einschränkt.

Herkömmliche Regelungsverfahren für mechanisch-hydraulische Systeme sind aus der EP 1 152 155 A2 und der US 9,502,109 bekannt.

Es ist nun eine Aufgabe der Erfindung, ein Regelungsverfahren bzw. einen Regler zu entwickeln, das bzw. der mechanische Systeme mit einem Freiheitsgrad pro hydraulischem Aktuator, also ein i.A. nichtlineares Gesamtsystem, im gesamten Arbeitsbereich stabilisiert und gleichzeitig das Schwingungsverhalten des mechanisch-hydraulischen Systems verbessert und insbesondere die Schwingungsneigung des mechanischen Systems durch Einbringen einer aktiven Dämpfung verringert.

Diese Aufgabe wird für das Regelungsverfahren durch die Merkmale des Anspruchs 1 und für den Regler durch die Merkmale des Anspruchs 10 gelöst. Beim Regelungsverfahren wird der Solldruck des hydraulischen Systems $\breve{p}_h$, vorzugsweise als Term ($\breve{p}_h - p_h$), in der Regelung (z.B. Positionsregelung) berücksichtigt und/oder die Geschwindigkeit $v_h$ des Hydraulikaktuators, z.B. des Kolbens eines Hydraulikzylinders, als Dämpfung, z.B. kombiniert mit einer allgemeinen Funktion $C_3$, beispielsweise über einen Dämpfungsfaktor $k_d$, in der Regelung berücksichtigt (also einer Regelung aufgeschaltet (mit der Wirkung einer parametrierbaren zusätzlichen Dämpfung)), wobei der Solldruck $\breve{p}_h$ und/oder die Hydraulikaktuatorgeschwindigkeit $v_h$ durch einen Beobachter ermittelt wird.

Der erfindungsgemäße Regler weist einen Messsensor zum Messen des Drucks $p_h$ eines hydraulischen Systems, z.B. eines Hydraulikzylinders, und einen Messsensor zum Messen der Position $x_h$ des Hydraulikaktuators, z.B. des Kolbens eines Hydraulikzylinders, auf und ist dadurch gekennzeichnet, dass eine Regelungseinheit mit den Eingangsgrößen Hydraulikdruck $p_h$, und Hydraulikaktuatorposition $x_h$ vorgesehen ist, wobei in der Regelungseinheit ein Beobachter zur Bestimmung des Solldrucks $\breve{p}_h$ und/oder der Geschwindigkeit $v_h$ des Hydraulikaktuators implementiert ist und im Regelgesetz des Reglers der Solldruck $\breve{p}_h$, vorzugsweise als Term ($\breve{p}_h$ - $ph$), in der Regelung berücksichtigt wird und/oder die Geschwindigkeit $v_h$ des Hydraulikaktuators als Dämpfung, also kombiniert mit einer allgemeinen Übertragungsfunktion $C_3$ (z.B. im einfachsten Fall ein Proportionalterm $k_d$) berücksichtigt wird (etwa der Regelung aufschaltbar ist). Zusätzlich kann vorgesehen sein, dass die gemessene Beschleunigung $a_h$ des Hydraulikaktuators relativ zu dem das auf den Hydraulikaktuator eine Kraft aufbringende Hydraulikmedium umschließende Behältnis (z.B. Hydraulikzylindergehäuse)- in der Regel kombiniert mit einer allgemeinen Übertragungsfunktion $C_4$ - der Regelung aufgeschaltet wird.

Es ist also keine direkte Messung von $\breve{p}_h$ oder $v_h$ erforderlich, ist eine solche aber vorhanden, kann diese natürlich verwendet werden.

Bei der Erfindung kann entweder nur der Solldruck $\breve{p}_h$ im hydraulischen System oder nur die Geschwindigkeit $v_h$ des Hydraulikaktuators oder es können beide Größen in die Regelung einfließen.

Dieses Regelungsverfahren bzw. dieser Regler stabilisiert das gesamte mechanisch-hydraulische System mit einem Freiheitsgrad unabhängig von der Wahl der Regelgröße, wie z.B. Position oder Druck (bzw. Stellkraft). Zusätzlich sind sie in der Lage, das System effektiv zu dämpfen indem sie dem schwingungsfähigen System in geeigneter Weise Energie entziehen. Somit verringern sie aktiv die Schwingungsneigung des geregelten Systems bzw. unterdrücken im Idealfall das Schwingen des Systems weitgehend. Das Regelungsverfahren bietet die Möglichkeit die aktive Dämpfung in unterschiedlicher Ausprägung in das System einzubringen, womit die effektive Dämpfung des Systems auch flexibel eingestellt werden kann.

Das Regelungsverfahren zeichnet sich weiters durch besondere Robustheit aus. Auch bei Variationen der physikalischen Gegebenheiten, wie z.B. der Kompressibilität der hydraulischen Ölsäule, sowie beim Auftreten von gewissen Leckagen im hydraulischen Aktuator, ist der Regler in der Lage das Gesamtsystem (Lastsystem + Hydraulik) sicher im gesamten allein durch die mechanische Konstruktion eingeschränkten Bereich zu stabilisieren. Damit werden unerwünschte Variationen von Regelgrößen, wie z.B. Bandzug oder Kraft auf das Band bei Walzwerken, welche sich wiederum in Qualitätseinbußen äußern würden, effektiv verringert bzw. vermieden.

Weiters können die durch die eingebrachte aktive Dämpfung optimierten Regelkreise deutlich schneller eingestellt werden, was wiederum Qualitätsverbesserungen bzw. Produktionssteigerungen bewirken kann, da einerseits, Störungen schneller und damit effektiver ausgeregelt werden können, andererseits Sollwerte schneller erreicht werden.

Weitere besonders vorteilhafte Ausgestaltungen ergeben sich aus den unabhängigen Ansprüchen und dieser Beschreibung der Erfindung.

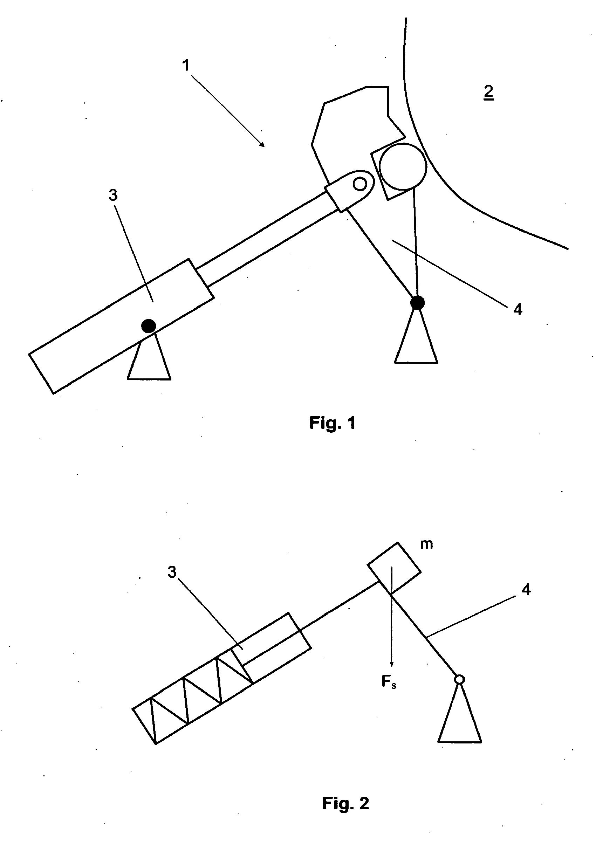

5Die vorliegende Erfindung wird im Folgenden zuerst für allgemeine mechanisch-hydraulische Systeme mit einem Freiheitsgrad pro hydraulischem Aktuator und danach anhand zweier spezieller nicht einschränkender und beispielhafter Anwendungen mit Hilfe der schematischen, nicht einschränkenden und beispielhaften Figuren 1 bis 5 beschrieben.

Dabei zeigt

Fig. 1     eine grob schematische Darstellung einer Korbrolle,
Fig. 2     die Abstraktion der Korbrolle als Feder-Masse System,
Fig. 3     eine schematische Darstellung der geometrischen Beziehungen an der Korbrolle,
Fig. 4     eine schematische Darstellung des Beobachters und
Fig. 5     eine schematische Darstellung des Regelkonzepts.

Allgemeine Darstellung

I.A. können mechanisch-hydraulische Systeme mit einem Freiheitsgrad aus Sicht der Modellierung aus einem unter Umständen nichtlinearen mechanischen Lastsystem (bspw. Korbrolle, Roboterarm, Feder-Masse-Dämpfersystem, etc. aber bspw. auch nur die Zylindermasse des Aktuators selbst) und einem meist nichtlinearen Aktuatorsystem (Aufbau des Druckes oder der Drücke), welches über ein oder mehrere Hydraulikventile versorgt wird, zusammengesetzt betrachtet werden. Um nun dem Gesamtsystem das gewünschte Verhalten aufzuprägen, wird die Fluidmenge, die sich im Aktuator befindet, in geeigneter Weise vorgegeben und über ein oder mehrere Hydraulikventile zugeführt. Hierfür wird das elastische Verhalten des hydraulischen Fluids in geeigneter Weise berücksichtigt. Sind die physikalischen Gegebenheiten des Lastsystem und damit $\breve{p}_h$ nicht hinreichend genau bekannt, es wirkt bspw. eine unbekannte externe generalisierte Kraft, kann vorerst die Fluidmenge nicht unmittelbar vorgegeben werden. Aus diesem Grund wird für die Fluidmenge, welche für den gewünschten Zustand des Lastsystems erforderlich ist, ein Beobachter entworfen. Dieser i.A. nichtlineare Beobachter kann auch ohne Messung der generalisierten Geschwindigkeit des Lastsystems ausgeführt werden, ohne dabei seine Funktion zu beeinträchtigen. Der Regler selbst verwendet nun die bekannte oder die aus dem Beobachter gewonnene Information über die nötige Fluidmenge, um den gewünschten Zustand des Gesamtsystems einzustellen.

Falls die mechanische Dämpfung des Lastsystems nicht ausreicht bzw. geeignet vorgegeben werden soll, kann dies mit oben beschriebenen Verfahren kombiniert werden. Hierfür wird zu dem Stellsignal obigen Reglers bzw. Reglerteils ein von der generalisierten Geschwindigkeit des Lastsystems abhängiges Signal in geeigneter Weise hinzugefügt. Diese Beeinflussung der Dämpfung kann auch mit einer Approximation der generalisierten Geschwindigkeit aus obigem oder einem anderen geeigneten Beobachter vorgenommen werden.

Für alle angeführten Varianten der Regelung steht ein geschlossener Nachweis der Stabilität des geregelten Gesamtsystems zur Verfügung.

**Korrekturterm zur Berücksichtigung des Solldrucks $\breve{p}_h$**

Die Grundgleichung eines von einem Servoventil angesteuerten (single acting) Hydraulikzylinders ist hinlänglich bekannt und ergibt sich unter gewissen physikalischen Annahmen beispielhaft zu

$$\dot{x}_h = v_h$$

$$\dot{p}_h = \frac{E\left(-v_h A + q_v - C_l p_h\right)}{V_{act}}$$

mit $p_h$ als Druck in der vom Servo aktuierten Kammer des Zylinders, A als Kolbenfläche, $v_h$ als Koibengeschwindigkeit, $q_v$ als Fluss vom Servoventil in den Hydraulikzylinder, $C_l$ als Leckage im Hydraulikzylinder, E als Elastizitätsmodul des Hydrauliköls und $V_{act}$ als Ölvolumen in der aktuierten Kammer. Die obige Gleichung kann auch auf andere Varianten hydraulischer Aktuatoren (wie zum Beispiel einen double acting Zylinder) erweitert werden, wie ebenfalls aus der einschlägigen Literatur hinlänglich bekannt. Um die Erfindung darzustellen reicht es jedoch aus, diese nur an einem single acting Zylinder zu beschreiben. Wie aus der obigen Gleichung ersichtlich, ergeben sich Druckänderungen also aus Änderungen des Volumens durch Kolbenbewegungen, Änderungen der Ölkompression durch Ölzufuhr (bei konstanter Kolbenposition) sowie eventueller Leckagen im Zylinder. Die Änderung selbst ist abhängig vom aktuellen Kammervolumen bzw. der Kolbenposition.

Wie unschwer erkennbar, ist die obige Grundgleichung nichtlinear. Weiters steckt in dieser Gleichung die Kolbengeschwindigkeit, die im Gegensatz zur Kolbenposition in der Regel nicht direkt gemessen wird bzw. gemessen werden kann. Dazu kommt, dass das Differenzieren der gemessenen Kolbenposition auf Grund von Quantisierungs- und Messrauschen ein praktisch nicht verwertbares Ergebnis liefert. So stehen in typischen Anwendungen als direkte und verwertbare Messgrößen für eine Linearisierung nur Istposition und Istdruck der aktuierten Hydraulikkammer zur Verfügung.

Es lässt sich nun mittels aus der Literatur bekannten nichtlinearen Methoden der Regelungstechnik eine exakte Linearisierung finden, die mit diesem beschränkten Messdatensatz auskommt. In einem solchen Regelgesetz kann nun der relative Fehler des Hydraulikdruckes der aktuierten Kammer zum Solldruck ($\breve{p}_h$ - $p_h$) auftreten (wobei dieser Solldruck durch eine vorgebbare Sollposition und das Lastsystem festgelegt wird).

Diese Methoden und ein solches Regelgesetz sind in untenstehenden Veröffentlichungen im Detail beschrieben.

- G. Grabmair, K. Schlacher, A. Kugi (2003): "Geometric Energy Based Analysis and Controller Design of Hydraulic Actuators Applied in Rolling Mills", ECC03 CD publication, 421.pdf, Cambridge, Great Britain.

- Kugi A.: "Nonlinear Control Based on Physical Models", Lecture Notes in Control and Information Sciences 260, Springer, 2000.

Weiters ist dies auch in der EP 992 295 A2 der Anmelderin beschrieben.

Betreibt man die hydraulische Anstellung in Positionsregelung so ist dieser Sollwert $\breve{p}_h$ typischerweise a priori nicht bekannt (da er z.B. stark von a priori unbekannten extern angreifenden Kräften, oder von Elastizitäten, deren genauer numerischer Wert nicht bekannt ist, abhängen kann). Ist dieser Sollwert $\breve{p}_h$ nicht bekannt, muss der Term ($\breve{p}_h$ - $p_h$) vernachlässigt werden.

Untersuchungen der Anmelderin durch Simulationen und theoretischen Überlegungen haben jedoch ergeben, dass diese Vernachlässigung eine destabilisierende Wirkung hat. Bei Berücksichtigung dieses Terms weist der geschlossene Regelkreis dagegen ein besseres Dämpfungsverhalten auf, wodurch der Regler auch deutlich schneller eingestellt werden kann. Dies lässt sich auch durch eine Energiebetrachtung des Gesamtsystems erkennen, wo ohne diesem Term die mechanische Dämpfung vermindert wird.

Die folgende Beschreibung der Erfindung zeigt nun Wege, die Größe $\breve{p}_h$ zu bestimmen.

Dazu wird zuerst in ganz allgemeiner Form ein mathematisches Modell (bzw. eine Zustandsbeschreibung) der Regelstrecke, also dem mechanisch-hydraulischen System mit einem Freiheitsgrad, aufgestellt. Ein solches allgemeines Modell kann bspw. aus dem hinlänglich bekannten und in der Regelungstechnik regelmäßig eingesetzten Lagrange Formalismus, also über Energieterme, abgeleitet werden. Die bekannte Lagrange Funktion L lässt sich dabei für ein mechanisch-hydraulisches System mit einem Freiheitsgrad als Differenz von kinetischer und potentieller Energie anschreiben, $L = \dfrac{1}{2} m(q)(\dot{q})^2 - V(q)$. m(q) ist dabei die generalisierte Massenmatrix, q die generalisierten Koordinaten, $\dot{q}$ die zeitliche Ableitung davon und V(q) das Potential. Mit der Hydraulikkraft $F_h$ als Eingang, ergeben sich allgemeine Zustandsgleichungen der Regelstrecke, mit den generalisierten Koordinaten q und dem Impuls P als Zustandsgrößen, die die Basis für alle Anwendungsfälle von mechanisch-hydraulischen Systemen mit einem Freiheitsgrad pro hydraulischen Aktuator darstellen.

$$\dot{q} = \frac{P}{m}$$

$$\dot{P} = -\frac{1}{2}\partial_q m(q)v^2 - \partial_q V - d(q)v + \partial_q x_h(q)F_h$$

Das Symbol $\partial_q$ bedeutet dabei die partielle Ableitung nach den generalisierten Koordinaten q.

Diese allgemeine Darstellung der Zustandsgleichung eines mechanisch-hydraulischen Systems mit einem Freiheitsgrad ist für den jeweiligen Anwendungsfall entsprechend anzupassen, also es sind einige Annahmen zu treffen, die für unterschiedliche Applikationen zu adaptieren sind. Das nachfolgende Beispiel soll ohne Einschränkung der Allgemeinheit eine solche Anpassung skizzieren und den Algorithmus zur Ermittlung von $\breve{p}_h$ darstellen.

**BEISPIEL**

**Hydraulische (single acting) Anstellung eines Walzgerüstes:**

Im Folgenden wird von einem hydraulischen System ausgegangen, das gegen ein lineares Feder-Masse System wirkt. Damit ergeben sich die folgenden Annahmen:

• Masse und Dämpfung sind ortsunabhängig.

• Das allgemeine Potential V(q) kann explizit in ein Federpotential $\dfrac{q^2}{2}$, dem Potential einer konstanten Lastkraft $F_l.q$ und einem hier noch allgemein formulierten Restterm $\tilde{V}$ aufgetrennt.

Daraus folgt in die allgemeine Zustandsgleichung für die Regelstrecke eingesetzt

$$\dot{q} = \frac{P}{m}$$

$$\dot{P} = F_l - d\frac{P}{m} - c_l q - \partial_q \widetilde{V} + \partial_q x_h(q) F_h$$

Diese Zustandsgleichung ist nun die Basis um den Solldruck $\breve{p}_h$ über einen Beobachter ermitteln zu können. Dafür wird nun eine Zustandstransformation angesetzt, damit das Modell für den Beobachter linear wird, womit ein linearer Beobachterentwurf möglich wird. Es werden als Zustandstransformation die aus Schwerkraft und Hydraulikkraft resultierenden Komponenten zum neuen Eingang $u_{obs}$ zusammengefasst, $u_{obs} = -\partial_q \widetilde{V} \partial_q x_h(q) F_h$. Damit kann nun wie im Nachfolgenden beschrieben ein Beobachter für den stationären Gleichgewichtszustand von $u_{obs}$ entworfen werden. Für den Gleichgewichtszustand muss natürlich gelten $\dot{p} = \dot{q} = 0$. Der Übergang von $q$ zur Abweichung $\overline{q}$ (mit $\overline{q} = q - \overline{q}$), ergibt einen konsistenten Satz von Zustandsgleichungen. Formal wird auch noch die dritte Zustandsgleichung für $\breve{u}_{obs}$ angeschrieben.

$$\dot{P} = -\frac{d}{m}P - \breve{u}_{obs} - c_l\overline{q} + u_{obs}$$

$$\dot{\breve{u}}_{obs} = 0$$

$$\dot{\overline{q}} = \frac{1}{m}P$$

$C_l$ als Federkonstante des Lastsystems (z.B. Elastizität des Materials) kann so explizit in den Beobachter gezogen werden (der ja beliebig angesetzt werden kann). Damit wird der Beobachter robust gegenüber Schwankungen/Unsicherheiten, z.B. der Materialelastizität. Die Lastkraft wird hier konstant angenommen werden, um einen linearen Beobachter entwerfen zu können. Gleichzeitig erzielt man damit eine "integrale Wirkung" des Beobachters, der den Fehler gegen Null gehen lässt.
Diese Zustandsgleichung des Beobachters mit dem transformierten Zustand $u_{obs}$ kann nun mit herkömmlichen Methoden der Regelungstechnik, z.B. mit der Beobachtergleichung in kontinuierlicher Form und der bekannten Formel von Ackermann, für den gesuchten stationären Gleichgewichtszustand von $u_{obs}$ gelöst werden. Auf diese allgemeinen regelungstechnischen Methoden muss hier nicht im Detail eingegangen werden, sondern sie können als bekannt vorausgesetzt werden. Daraus kann nun unter Berücksichtigung der gewählten Zustandstransformation der gesuchte stationäre Gleichgewichtsdruck $\breve{p}_h$ ermittelt werden. Durch den Beobachter ermittelte Größen werden nachfolgend mit einem Dach, z.B. $\breve{p}_h$, bezeichnet. Mit $u_{obs} = -\partial_q \widetilde{V} + \partial_q x_h(q) F_h$ und $F_h = A \cdot p_h$ folgt nun sofort $\breve{p}_h$, womit die gesuchte Größe in allgemeiner Form ermittelt ist. Zusätzlich liefert der Beobachter aber noch den Impuls, wie aus den zugrunde liegenden Gleichungen ersichtlich ist, der ebenfalls verwendet werden kann, wie unten noch erläutert wird.

**BEISPIEL**

**Hydraulische Anstellung der Korbrolle eines Haspels**

Um die Verwendung der oben allgemein angeschriebenen Gleichungen zu veranschaulichen und die Allgemeingültigkeit zu demonstrieren, wird anhand eines mechanisch-hydraulischen Systems mit einem Freiheitsgrad in Form einer Korbrolle eines Haspels ein weiteres konkretes Beispiel erläutert. Neben der Skizzierung der Ermittlung von

$\breve{P}_h$ wird die aktive Einbringung von Dämpfung dargestellt. Zum Andrücken des Bleches beim Aufwickelvorgang am Haspel einer Warmbandstrasse werden so genannte Korbrollen eingesetzt (typischerweise drei bis vier Korbrollen um den Umfang), wie in Fig. 1 grob schematisch dargestellt. Die Korbrolle 1 drückt das Blech über einen Hydraulikzylinder 3, wobei das Servoventil hier nicht dargestellt ist, gegen die Haspel 2. Dabei ist sowohl der Hydraulikzylinder als auch der Korbrollenarm 4 drehbar gelagert. Der Kolben des Hydraulikzylinders 3 ist ebenfalls drehbar am Korbrollenarm 4 gelagert. Fig. 2 zeigt das selbe System abstrahiert als mechanisches Feder-Masse System mit Hebelarm, das als Modell für die folgenden Überlegungen herangezogen wird.

Im Unterschied zum vorherigen Beispiel würde sich bei Wahl der Zylinderkoordinaten als generalisierte Ortskoordinaten q eine nicht konstante Massenmatrix ergeben. Es besteht nun die generelle Möglichkeit eine Koordinatentransformation durchzuführen, welche auf Grund der Flachheit der Massenmetrik (die durch die Massenmatrix induzierte Metrik) immer existiert und auch berechnet werden kann, sodass sich die Massenmatrix in den transformierten Koordinaten als Konstante darstellt. Im vorliegenden Beispiel erreicht man dies in einfacher Weise durch rein geometrischen Transformation auf $\alpha$, den Anstellwinkel der Korbrolle.

Generell muss aber diese Koordinatentransformation (und die Stellgrößentransformation auf $\breve{u}_{obs}$) nicht explizit durchgeführt werden, wenn sie implizit in einer nichtlinearen Form des Beobachters berücksichtigt werden, was möglich ist, da ein geschlossenes Differentialgleichungssystem für den nichtlinearen Beobachter in allgemeinen Koordinaten vorliegt. In dieser Form des Beobachters kann auch mit nicht konstanter Massenmatrix gearbeitet werden.

In diesem Beispiel werden aber Koordinaten- und Stellgrößentransformation explizit dargestellt.

Es werden für die allgemeinen Zustandsgleichungen der Regelstrecke für die konkrete Anwendung gültige Annahmen getroffen:

- $q = \alpha$, der Anstellwinkel der Korbrolle wird als Ortskoordinate verwendet (Koordinatentransformation), woraus folgt $\dot{q} = \omega$ mit $\omega$ gleich der Winkelgeschwindigkeit.

- $m(q)$ entspricht einer im allgemeinen Fall von der Ortskoordinate q abhängigen Massenmatrix, die prinzipiell für den Beobachterentwurf herangezogen werden kann. Wie oben erwähnt, wird in diesem Beispiel aber günstigerweise (und aus Gründen der Anschaulichkeit) mit $q = \alpha$ der Anstellwinkel als Ortskoordinate gewählt, wodurch m(q) dem Trägheitsmoment $\Theta$ der Korbrolle entspricht und konstant ist, woraus folgt $\partial_q m(q) = 0$.

- $d(q) = d = const.,$ die Dämpfung ist damit positionsunabhängig.

- Das Potential $V$ setzt sich aus einem (konstanten) Lastmoment $M_l$ und der Schwerkraft zusammen. Prinzipiell ist es auch hier (analog zu oben) möglich, eine Elastizität $c_l$ zu berücksichtigen

-

$$V(q) = -M_l \cdot q + \widetilde{V}(q) \cdots \left( + c_l \frac{q^2}{2} \right)$$

Diese Annahmen führen zu den folgenden Gleichungen:

$$\dot{q} = \frac{P}{\Theta}$$

$$\dot{P} = -d\frac{p}{\Theta} + M_l - \partial_q \widetilde{V} + \partial_q x_h(q) F_h \cdots + c_l \cdot q$$

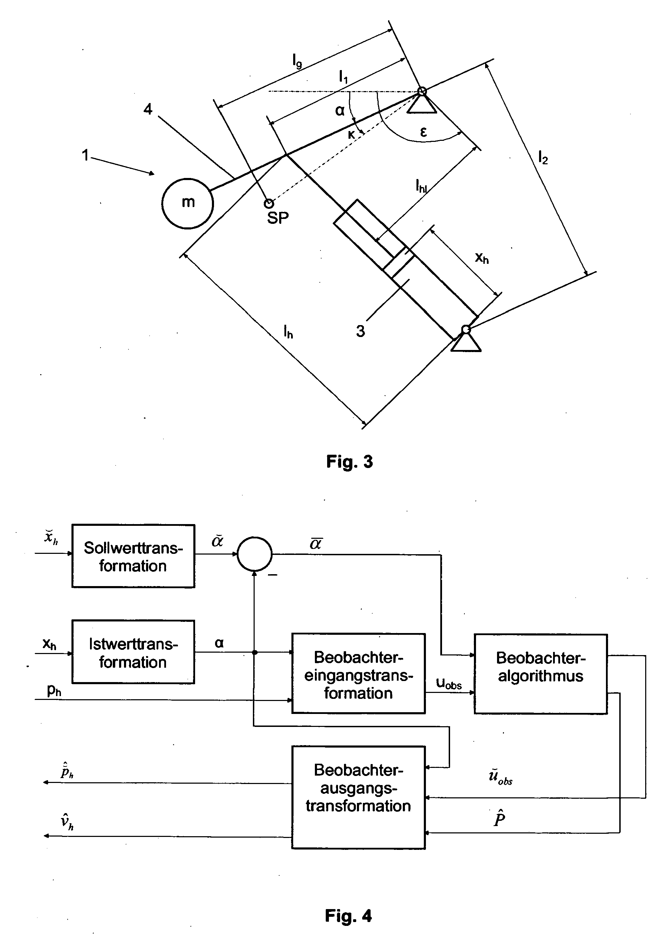

Aus den geometrischen Beziehungen am abstrahierten Feder-Masse System lassen sich weitere Beziehungen herleiten und die obige Gleichung weiter umformen. Fig. 3 zeigt eine mögliche Variante inklusive der geometrischen Größen die herangezogen werden können.

- $\partial q \tilde{V}(q)$ : $\tilde{V}(q)$ entspricht wie erwähnt dem Potential der Schwerkraft.

Wie oben allgemein gezeigt wird nun eine Stellgrößentransformation auf einen neuen Eingang $u_{obs}$ der Form $u_{obs} = -\partial_q \tilde{V} + \partial_q x_h(q) F_h$ durchgeführt, was in diesem konkreten Anwendungsbeispiel zu $u_{obs} = -\partial_q \tilde{V} + \partial_q x_h(q) F_h = M_g + M_h$ führt. Der Gleichgewichtszustand ergibt wieder mit $\dot{p} = \dot{q} = 0$ $\breve{u}_{obs} = M_l$ oder in allgemeinerer Form mit einer Elastizität $c_l$ ergibt sich $\breve{u}_{obs} = M_l + c_l \cdot q$.

Mit der formalen Einführung des neuen Zustandes $\breve{u}_{obs}$, sowie dem Übergang auf relative Koordinaten für $q$, ergeben sich nun folgende endgültigen Zustandsgleichungen für den Beobachter

$$\dot{P} = -\frac{d}{\Theta} P - \bar{u}_{obs} - c_l \bar{q} + u_{obs}$$

$$\dot{\breve{u}}_{obs} = 0$$

$$\dot{\bar{q}} = \frac{1}{\Theta} P$$

Aus dieser Gleichung kann nun wieder der Zustand $\breve{u}_{obs}$ ermittelt werden. Durch Rückführung von den generalisierten Koordinaten auf gemessene Koordinaten, hier $x_h$, lässt sich $\breve{p}_h$ wieder ermitteln

Mit dieser zuerst allgemein und anschließend anhand eines konkreten Beispieles dargestellten Methode wird gezeigt, wie der stationäre Gleichgewichtsdruck $\breve{p}_h$ durch einen Beobachter und eine vorangehende Zustandstransformation ermittelt werden kann. Diese Methode kann für alle mechanisch-hydraulischen Systeme mit einem Freiheitsgrad pro hydraulischem Aktuator analog angewendet werden, wobei lediglich die geometrischen und mechanischen Zusammenhänge für das jeweilige System berücksichtigt werden müssen.

Wie oben bereits erwähnt, liefert der Beobachter aber nicht nur den stationären Gleichgewichtsdruck $\breve{p}_h$, sondern auch den Impuls $\hat{P}$, aus dem nun einfach über die Beziehung $\hat{v}_h = \frac{\hat{P}}{m}$ die nicht messbare Geschwindigkeit des Hydraulikkolbens ermittelt m werden kann und nun ebenfalls zur Verfügung steht und bei Bedarf ebenfalls verwendet werden kann.

In Fig. 4 werden die oben beschriebenen Zusammenhänge für den Beobachter anhand eines Beobachterschemas nochmals beschrieben. Der Beobachter selbst verwendet Ein- und Ausgangsgrößen, die sich von den tatsächlich messbaren bzw. benötigten unterscheiden. Zum einem wird die messbare Eingangsgröße in Form der Position $x_h$ über die geometrischen Beziehungen auf einen Winkel $\alpha$ transformiert. Weiters ist eine Beobachterzustandstransformation auf den neuen Zustand $u_{obs}$ notwendig. Aus den derart ermittelten Größen $\bar{\alpha}$ und $u_{obs}$ ermittelt der Beobachter den Zustand $\hat{\breve{u}}_{obs}$ und den Impuls $\hat{P}$. Aus $\hat{\breve{u}}_{obs}$ folgt durch Rücktransformation der stationäre Gleichgewichtsdruck $\breve{p}_h$ und aus dem Impuls $\hat{P}$ kann einfach die Geschwindigkeit $\hat{v}_h$ ermittelt werden.

**Einbringung (parametrierbarer) aktiver Dämpfung**

Ein Hydraulikzylinder mit einem Servoventil als Ansteuerung weist bekannter Weise als Regelstrecke betrachtet ein integrales Verhalten auf. Ebenfalls ist bekannt, dass in einem mechanischen System ein Dämpfungsterm proportional einer Geschwindigkeit ist. Um also eine Dämpfung in eine integrale Strecke einzubringen muss der Strecke folglich eine beschleunigungsproportionale Größe aufgeschaltet werden. Das kann direkt erfolgen, indem die Beschleunigung gemessen wird und über ein Dämpfungsglied mit einer Dämpfung $k_d{}^a$ auf einen Aktuator (Servoventil) aufgeschaltet wird, wie hinlänglich bekannt.

Im Zuge der gegenständlichen Erfindung wurde aber festgestellt, dass sich auch eine Dämpfung einstellt, wenn auf eine geregelte hydraulische Strecke mit integralem Verhalten eine geschwindigkeitsproportionale Größe aufgeschaltet wird. Es zeigte sich nämlich, dass sich unter bestimmten Parameterrestriktionen eine "differenzierende Wirkung" einstellt. Ausschlaggebend dafür ist das Verhältnis zwischen Dämpfung $k_d$ und der Proportionalverstärkung des Reglers $k_p$. Dabei gilt i.A. $k_d > k_p$ und $k_p$ ist so zu wählen, dass bestimmte Stabilitätskriterien erfüllt werden. Es kann natürlich kein absolutes, allgemein gültiges Verhältnis von $k_d$ zu $k_p$ angegeben werden, da dieses natürlich von den tatsächlichen Gegebenheiten der Strecke abhängig ist. Diese Parameter sind daher an die Strecke anzupassen, z.B. durch Versuche oder über Simulationen mit herkömmlichen Programmen, wie z.B. MATLAB. Da die Geschwindigkeit aber ebenfalls eine Ausgangsgröße des Beobachters ist, kann durch diese Erkenntnis sehr einfach eine zusätzlich Dämpfung in das System eingebracht werden, was sich sehr vorteilhaft auf die Regelung des Systems auswirkt.

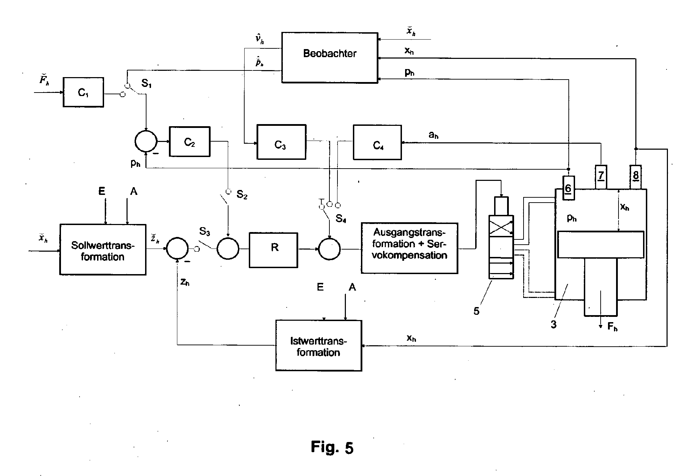

Diese Zusammenhänge sollen nun anhand der schematischen Darstellung des Regelkonzepts gemäß Fig. 5 erläutert werden.

Die Regelstrecke wird gebildet durch das mechanisch-hydraulische System mit einem Freiheitsgrad pro hydraulischem Aktuator, in Fig. 5 ist davon dargestellt der Hydraulikzylinder 3 mit der Ansteuerung über ein Servoventil 5. Das Servoventil 5 kann einen single acting Zylinder, oder wie in Fig. 5 durch die strichlierte Doppellinie angedeutet auch einen double acting Zylinder ansteuern. Genauso sind andere Bauformen von Hydraulikzylindern oder andere auf dem Hydraulikprinzip basierende Aktuatoren denkbar. Am Hydraulikzylinder 3 ist ein Drucksensor 6, ein Beschleunigungssensor 7 und ein Positionssensor 8 vorgesehen, die geeignete Ist-Messsignale für die Regelung liefern.

Die Regelung, wie in der EP 992 295 A2 der Anmelderin beschrieben, beruht auf einer oben beschriebenen Zustandstransformation für die Soll-, Ist- und Stellgröße, um einen linearen Regler implementieren zu können. Der Regler R kann, wie aus der Regelungstechnik bekannt, z.B. eine beliebige Übertragungsfunktion sein (im einfachsten Fall z.B. ein Proportionalglied mit einer Proportionalverstärkung kp). Ein Servoventil 5 hat ein typisch nichtlineares Verhalten, das durch eine bekannte Servokompensation kompensiert werden könnte. Das Regelgesetz für diese herkömmliche Regelung wurde oben bereits beschrieben. Wenn die Regelung so in Positionsregelung betrieben werden soll, sind die Schalter $S_2$ und $S_4$ zu öffnen und der Schalter $S_3$ zu schließen. Die Schalter $S_1$ bis $S_4$ müssen natürlich nicht tatsächliche elektro-mechanische Schalter sein, sondern könnten natürlich auch nur in Software implementiert sein.

Bei einer Kraftregelung der Hydraulikkraft $F_h$ ist für eine mögliche Realisierungsform des Reglers die Transformation von Soll und Istwert überflüssig und kann einfach durch Umlegen des Schalters $S_1$ auf Krafteingang, durch Schließen des Schalters $S_2$ und durch Öffnen des Schalters $S_3$ aktiviert werden. D.h. Die Positionsabweichung wird wegschaltet und die Drucksoll- und Druckistwerte können direkt vorgegeben werden.

Die Elemente $C_1$, $C_2$, $C_3$, und $C_4$ ermöglichen eine Anpassung ihrer jeweiligen Eingänge und stellen in ihrer allgemeinsten Form Funktionen mit dem Eingang und gegebenenfalls anderer Größen als Parameter dar. Sie können vereinfacht (lineare) dynamische Systeme sein oder im einfachsten Fall ein Proportionalfaktor.

Diese bereits bekannte Regelung kann nun einfach erweitert werden, indem der Term ($\check{\tilde{p}}_h$ - $p_h$) berücksichtigt wird, wozu der Schalter $S_1$ auf Druckeingang umzulegen ist und die Schalter $S_2$ und $S_3$ zu schließen sind. Den stationären Gleichgewichtsdruck $\check{\tilde{p}}_h$ liefert dabei der Beobachter, wie oben allgemein und an konkreten Beispielen beschrieben. Damit wird eine zusätzliche Dämpfung in die Regelung eingebracht.

Es kann eine weitere zusätzliche Dämpfung in das System eingebracht werden, indem der Schalter $S_4$ entweder auf geschwindigkeitsproportionale oder beschleunigungsproportionale Dämpfung über $C_3$ bzw. $C_4$ umgelegt wird. Bei der geschwindigkeitsproportionalen Dämpfung liefert der Beobachter die Geschwindigkeit $\hat{v}_h$. $C_3$ ermöglicht z.B. eine dynamische Anpassung des beobachteten Signals sowohl in Bezug auf eine optimale Signalcharakteristik als auch in Bezug auf eine Anpassung des Ausmaßes der eingebrachten Dämpfung (im einfachsten Fall entspricht $C_3$ einem Proportionalterm $k_d$ wie oben beschrieben). Bei der beschleunigungsproportionalen Dämpfung liefert der Beschleunigungssensor 7 die erforderliche Beschleunigung. $C_4$ hat die gleiche Aufgabe wie $C_3$ (wiederum im einfachsten Fall ein Proportionalterm $k_d{}^a$). Falls ein solcher Beschleunigungssensor 7 nicht vorhanden ist, kann dieser Teil der Regelung auch fehlen.

Daraus folgt, dass der Regler je nach Bedarf in mehreren unterschiedlichen Modi betrieben werden kann. Die

Übertragungsfunktionen $C_1$, $C_2$, $C_3$, $C_4$, R können natürlich für die unterschiedlichen Modi ebenfalls unterschiedlich sein.

Eine oben beschriebene Regelung kann natürlich besonders vorteilhaft in einer Regelungseinheit, wie z.B. einem Computer, implementiert werden. Die notwendigen Größen, wie Hydraulikdruck $p_h$, Zylinderposition $x_h$ oder die vorgebbaren Sollgrößen, aber auch eine Hydraulikkraft (für die Kraftregelung), werden durch die Messsensoren erfasst und der Regelungseinheit als Eingangsgrößen zur Verfügung gestellt. Die Ausgangsgröße der Regelungseinheit ist typischerweise ein Ansteuersignal für das Servoventil, wie z.B. der Servoventilfluss $q_v$ oder die Servoventilkolbenstellung $x_s$.

Grundsätzlich ist mit der beschriebenen Regelung jedes mechanisch-hydraulische System mit einem Freiheitsgrad pro hydraulischem Aktuator mit erhöhter Stabilität und Dämpfung regelbar und die Erfindung ist nicht beschränkt auf die hier beschriebenen Anwendungsfälle.

**Patentansprüche**

1. Positions Regelungsverfahren für ein mechanisch-hydraulisches System mit einem Freiheitsgrad pro hydraulischem Aktuator als Regelstrecke und mit Messsensoren (6,8) zum Messen des Drucks eines hydraulischen Systems und zum Messen der Position des Hydraulikaktuators **dadurch gekennzeichnet, dass** der Solldruck des hydraulischen Systems $\breve{p}_h$, vorzugsweise als Term $(\breve{p}_h - p_h)$, in der Regelung berücksichtigt wird und die Geschwindigkeit $v_h$ des Hydraulikaktuators (3) als Dämpfung der Regelung aufgeschaltet wird, wobei der Sollwert $\breve{p}_h$ und die Hydraulikaktuatorgeschwindigkeit $v_h$ durch einen Beobachter ermittelt werden und wobei die Hydraulikaktuatorgeschwindigkeit $v_h$ dem Ausgangssignal des Reglers (R) aufgeschaltet wird.

2. Positions - Regelungsverfahren nach Anspruch 1, **dadurch gekennzeichnet, dass** für den Beobachter ein mathematisches Modell der Regelatrecke verwendet wird, bei dem die Eingangsgröße einer stellgrößentmnsformation auf eine neue Eingangsgröße $u_{obs}$ unterworfen wird, sodass das mathematische Modell der Regelstrecke für den Beobachter linear wird.

3. Positions - Regelungsverfahren nach Anspruch 1 oder 2, **dadurch gekennzeichnet, dass** das mechanische Lastsystem als mathematisches Modell dargestellt wird, wobei das Gleichungssystem beispielsweise mit Methoden der analytischen Mechanik, dabei beispielsweise mit Hilfe des Lagrange Formalismus

$$\dot{q} = v = \frac{P}{m}$$

$$\dot{P} = \frac{d}{dt}(m \cdot v) = -\frac{1}{2}\partial_q m(q)v^2 - \partial_q V - d(q)v + \partial_q x_h(q)F_h$$

, dargestellt wird.

4. Positions - Regelungsverfahren nach Anspruch 3, **dadurch gekennzeichnet dass** bei nicht konstanter Massenmatrix für den Beobachterentwurf eine Koordinatentransformation und Stetigrößentransformation so erfolgt, dass sich in den transformierten Koordinaten die Massenmatrix als Konstante darstellt.

5. Positions - Regelungsverfahren nach Anspruch 1, **dadurch gekennzeichnet, dass** bei nicht konstanter Massenmatrix ein nichtlinearer Beobachter verwendet wird in dem die Koordinaten- und Stellgrößentransformation nach Anspruch 4 implizit berücksichtigt wird.

6. Positions - Regelungsverfahren nach einem der Ansprüche 1 bis 5, **dadurch gekennzeichnet, dass** der Solldruck $\breve{p}_h$ mit dem durch den Beobachter im Sinne eines Störgrößenbeobachters ermittelten Zustand $\breve{\hat{u}}_{obs}$ durch Rücktransformation ermittelt wird.

7. Positions - Regelungsverfahren nach einem der Ansprüche 1 bis 6, **dadurch gekennzeichnet, dass** mit dem Beobachter der Impuls $\hat{P}$ und daraus die Geschwindigkeit $\hat{v}_h$ ermittelt wird.

8. Positions - Regelungsverfahren nach einem der Ansprüche 1 bis 7, **dadurch gekennzeichnet, dass** die Geschwindigkeit $v_h$ eines Hydraulikaktuators kombiniert mit einer allgemeinen Übertragungsfunktion ($C_3$) einem geschlossenen Regelkreis aufgeschaltet wird.

9. Positions - Regelungsverfahren nach einem der Ansprüche 1 bis 8, **dadurch gekennzeichnet, dass** die gemessene Beschleunigung $a_h$ eines Hydraulikaktuators kombiniert mit einer allgemeinen Übertragungsfunktion ($C_4$) der Regelung aufgeschaltet wird.

10. Positions - für ein mechanisch-hydraulisches System mit einem Freiheitsgrad pro hydraulischem Aktuator als Regelstrecke und einem Messsensor (6) zum Messen des Drucks $p_h$ eines hydraulischen Systems, z.B. eines Hydraulikzylinders (3), und einem Messsensor (8) zum Messen der Position $x_h$ des Hydraulikaktuators, z.B. des Kolbens eines Hydraulikzlinders (3), **dadurch gekennzeichnet, dass** eine Regelungseinheit mit den Eingangsgrößen Hydraulikdruck $p_h$, und Hydraulikaktuatorposition $x_h$ vorgesehen ist, in der Regelungseinheit ein Beobachter zur Bestimmung das Solldrucks $\bar{p}_h$ des hydraulischen Systems und der Geschwindigkeit $v_h$ des Hydraulikaktuators (3) implementiert ist und im Regelgesetz des Reglers der Solldruck $\breve{p}_h$, vorzugsweise als Term ($\breve{p}_h - p_h$), in der Regelung berüdcksichtigt wird, und die Geschwindigkeit $v_h$ des Hydraulikaktuators als Dämpfung der Regelung aufschaltbar ist, wobei dies am Ausgang des Reglers (R) erfolgt.

11. Positions - Regler nach Anspruch 10, **dadurch gekennzeichnet, dass** die gemessene Beschleunigung $a_h$ des Hydraulikaktuators kombiniert mit einer allgemeinen Übertragungsfunktion ($C_4$) der Regelung aufschaltbar ist.

12. Positions - Regler nach Anspruch 10 oder 11, **dadurch gekennzeichnet, dass** die Geschwindigkeit $V_h$ eines Hydraulikaktuators kombiniert mit einer allgemeinen Übertragungsfunktion ($C_3$) einem geschlossenen Regelkreis aufschaltbar ist.

13. Positions - Regler nach einem der Ansprüche 10 bis 12, **dadurch gekennzeichnet, dass** der Regler zwischen mehreren Regelungsmodi, in denen verschiedene Dämpfungen aufgeschaltet werden, hin- und herschaltbar ist.

## Claims

1. Position control method for a mechanohydraulic system with a degree of freedom for each hydraulic actuator, as a controlled element, and with measuring sensors (6, 8) for measuring the pressure of a hydraulic system and for measuring the position of the hydraulic actuator, **characterized in that** the desired pressure of the hydraulic system $\breve{p}_h$, preferably as the term ($\breve{p}_h - p_h$), is taken into account in the control and the speed $v_h$ of the hydraulic actuator (3) is locked onto the control as damping, the desired value $\breve{p}_h$ and the hydraulic actuator speed $v_h$ being determined by an observer, and the hydraulic actuator speed $v_h$ being locked onto the output signal of the controller (R).

2. Position control method according to Claim 1, **characterized in that**, for the observer, a mathematical model of the controlled element is used, in which the input variable is subjected to regulating variable transformation to a new input variable $u_{obs}$, so that the mathematical model of the controlled element becomes linear for the observer.

3. Position control method according to Claim 1 or 2, **characterized in that** the mechanical load system is represented as a mathematical model, the equation system being illustrated, for example, by means of methods of analytical mechanics, in this case, for example, with the aid of the Lagrange formalism

$$\dot{q} = v = \frac{P}{m}$$

$$\dot{P} = \frac{d}{dt}(m \cdot v) = -\frac{1}{2}\partial_q m(q)v^2 - \partial_q V - d(q)v + \partial_q x_h(q)F_h$$

4. Position control method according to Claim 3, **characterized in that**, in the case of a nonconstant mass matrix, a coordinate transformation and regulating variable transformation take place for the observer design, such that the mass matrix is presented as a constant in the transformed coordinates.

5. Position control method according to Claim 1, **characterized in that**, in the case of a nonconstant mass matrix, a nonlinear observer is used, in which the coordinate and regulating variable transformation according to claim 4 is taken into account implicitly.

6. Position control method according to one of Claims 1 to 5, **characterized in that** the desired pressure $\breve{P}_h$ is determined by inverse transformation by means of the state $\breve{u}_{obs}$ determined by the observer functioning as a disturbance variable observer.

7. Position control method according to one of Claims 1 to 6, **characterized in that** the momentum $\hat{P}$ and, from this, the speed $\hat{v}_h$ are determined by means of the observer.

8. Position control method according to one of Claims 1 to 7, **characterized in that** the speed $v_h$ of a hydraulic actuator, in combination with a general transfer function ($C_3$), is locked onto a closed control circuit.

9. Position control method according to one of Claims 1 to 8, **characterized in that** the measured acceleration $a_h$ of a hydraulic actuator, in combination with a general transfer function ($C_4$), is locked onto the control.

10. Position controller for a mechanohydraulic system with a degree of freedom for each hydraulic actuator, as a controlled element, and with a measuring sensor (6) for measuring the pressure $p_h$ of a hydraulic system, for example a hydraulic cylinder (3), and with a measuring sensor (8) for measuring the position $x_h$ of the hydraulic actuator, for example the piston of a hydraulic cylinder (3), **characterized in that** a control unit with the hydraulic pressure $p_h$ and hydraulic actuator position $x_h$ as input variables is provided, an observer for determining the desired pressure $\breve{P}_h$ of the hydraulic system and the speed $v_h$ of the hydraulic actuator (3) is implemented in the control unit, and the desired pressure $\breve{P}_h$, preferably as the term ($\breve{P}_h$ - $p_h$), is taken into account in the control in the control law of the controller, and the speed $v_h$ of the hydraulic actuator can be locked onto the control as damping, this taking place at the output of the controller (R).

11. Position controller according to Claim 10, **characterized in that** the measured acceleration $a_h$ of the hydraulic actuator, in combination with a general transfer function ($C_4$), can be locked onto the control.

12. Position controller according to Claim 10 or 11, **characterized in that** the speed $v_h$ of a hydraulic actuator, in combination with a general transfer function ($C_3$), can be locked onto a closed control circuit.

13. Position controller according to one of Claims 10 to 12, **characterized in that** the controller can be switched to and fro between a plurality of control modes in which various dampings are locked on.

**Revendications**

1. Procédé de commande de position destiné à un système mécanique-hydraulique ayant un degré de liberté par actionneur hydraulique en tant que trajet de commande et comportant des capteurs de mesure (6, 8) destinés à mesurer la pression d'un système hydraulique et à mesurer la position de l'actionneur hydraulique, **caractérisé en ce que** la pression de consigne $\breve{p}_h$ du système hydraulique, de préférence sous la forme du terme ($\breve{p}_h$ - $p_h$),

est prise en compte dans la commande et **en ce que** la vitesse $v_h$ de l'actionneur hydraulique (3) est appliquée à la commande en tant qu'amortissement, la valeur de consigne $\breve{p}_h$ et la vitesse $v_h$ de l'actionneur hydraulique étant obtenues au moyen d'un observateur et la vitesse $v_h$ de l'actionneur hydraulique étant appliquée au signal de sortie du dispositif de commande (R).

2.  Procédé de commande de position selon la revendication 1, **caractérisé en ce qu'**un modèle mathématique du trajet de commande est utilisé pour l'observateur, modèle dans lequel la grandeur d'entrée est soumise à une transformation de grandeurs de commande en une nouvelle grandeur d'entrée $u_{obs}$, de façon à ce que le modèle mathématique du trajet de commande soit linéaire pour l'observateur.

3.  Procédé de commande de position selon la revendication 1 ou 2, **caractérisé en ce que** le système de charge mécanique est représenté par un modèle mathématique, le système d'équations étant par exemple représenté par des méthodes de mécanique analytique, par exemple à l'aide du formalisme de Lagrange :

$$\dot{q} = v = \frac{P}{m}$$

$$\dot{P} = \frac{d}{dt}(m \cdot v) = -\frac{1}{2}\partial_q m(q)v^2 - \partial_q V - d(q)v + \partial_q x_h(q)F_h$$

4.  Procédé de commande de position selon la revendication 3, **caractérisé en ce que**, lorsque la matrice de masse n'est pas constante pour la conception de l'observateur, une transformation de coordonnées et une transformation de grandeurs de commande s'effectuent de telle manière que la matrice de masse soit représentée par une constante.

5.  Procédé de commande de position selon la revendication 1, **caractérisé en ce que**, lorsque la matrice de masse n'est pas constante, on utilise un observateur non linéaire, dans lequel la transformation de coordonnées et de grandeurs de commande de la revendication 4 est implicitement prise en compte.

6.  Procédé de commande de position selon l'une des revendications 1 à 5, **caractérisé en ce que** la pression de consigne $\breve{p}_h$ est déterminée par transformation inverse à partir de l'état $\hat{u}_{obs}$ déterminé au moyen de l'observateur considéré au sens d'un observateur de grandeur de perturbation.

7.  Procédé de commande de position selon l'une des revendications 1 à 6, **caractérisé en ce que** l'impulsion $\hat{P}$ et par conséquent, la vitesse $\hat{v}_h$, sont déterminées au moyen de l'observateur.

8.  Procédé de commande de position selon l'une des revendications 1 à 7, **caractérisé en ce que** la vitesse $v_h$ d'un actionneur hydraulique, combinée à une fonction de transfert générale (C₃), est appliquée à un dispositif d'asservissement en boucle fermée.

9.  Procédé de commande de position selon l'une des revendications 1 à 8, **caractérisé en ce que** l'accélération mesurée $a_h$ d'un actionneur hydraulique, combinée à une fonction de transfert générale (C₄), est appliquée à la commande.

10. Dispositif de commande de position destiné à un système mécanique-hydraulique ayant un degré de liberté par actionneur hydraulique en tant que trajet de commande et comprenant un capteur de mesure (6) destiné à mesurer la pression $p_h$ d'un système hydraulique, par exemple d'un cylindre hydraulique (3), et un capteur de mesure (8) destiné à mesurer la position $x_h$ de l'actionneur hydraulique, par exemple du piston d'un cylindre hydraulique (3), **caractérisé en ce qu'**il est prévu une unité de commande recevant en tant que grandeurs d'entrée la pression hydraulique $p_h$ et la position $x_h$ de l'actionneur hydraulique, **en ce qu'**un observateur destiné à estimer la pression

de consigne $\breve{p}_h$ du système hydraulique et la vitesse $v_h$ de l'actionneur hydraulique (3) est mis en oeuvre dans l'unité de commande, **en ce que** la pression de consigne $\breve{p}_h$, de préférence sous la forme du terme ($\breve{p}_h - p_h$), est prise en compte lors de la commande dans le jeu de règles du dispositif de commande, et **en ce que** la vitesse $v_h$ de l'actionneur hydraulique peut être appliquée à la commande en tant qu'amortissement, cela s'effectuant à la sortie du dispositif de commande (R).

**11.** Dispositif de commande de position selon la revendication 10, **caractérisé en ce que** l'accélération $a_h$ mesurée de l'actionneur hydraulique, combinée à une fonction de transfert générale ($C_4$) de la commande, peut être appliquée.

**12.** Dispositif de commande de position selon la revendication 10 ou 11, **caractérisé en ce que** la vitesse $v_h$ d'un actionneur hydraulique, combinée à une fonction de transfert générale ($C_3$), peut être appliquée à un dispositif d'asservissement en boucle fermée.

**13.** Dispositif de commande de position selon les revendications 10 à 12, **caractérisé en ce que** le dispositif de commande est commutable entre plusieurs modes de commande dans lesquels différents amortissements sont appliqués.

Fig. 1

Fig. 2

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1152155 A2
- US 9502109 B
- EP 992295 A2

**In der Beschreibung aufgeführte Nicht-Patentliteratur**

- **G. Grabmair ; K. Schlacher ; A. Kugi.** Geometric Energy Based Analysis and Controller Design of Hydraulic Actuators Applied in Rolling Mills. *ECC03 CD publication, 421.pdf,* 2003
- Nonlinear Control Based on Physical Models. **Kugi A.** Lecture Notes in Control and Information Sciences. Springer, 2000, vol. 260